# EUROPÄISCHE PATENTSCHRIFT

(11) **EP 2 971 923 B1**
(45) Veröffentlichungstag und Bekanntmachung des Hinweises auf die Patenterteilung: **27.09.2017**
(21) Anmeldenummer: 14719853.5
(22) Anmeldetag: 10.03.2014
(51) Int. Cl.: F16L 41/02, F16L 41/03, F16L 47/32, F24F 13/02

(54) **ROHRVERBINDUNGSSTÜCK**
PIPE CONNECTION PIECE
PIÈCE DE RACCORDEMENT DE TUYAU

(30) Priorität: 11.03.2013 CH 589132013
(43) Veröffentlichungstag der Anmeldung: 20.01.2016
(73) Patentinhaber: Zehnder Group International AG, 5722 Gränichen (CH)
(72) Erfinder: SCHIFFER, Ralf, 41812 Erkelenz (DE); WESCHLE, Hans-Peter, 77743 Neuried (DE)
(74) Vertreter: Veni Swiss & European Patent Attorneys
(86) Internationale Anmeldenummer: PCT/IB2014/000274
(87) Internationale Veröffentlichungsnummer: WO 2014/140714

(56) Entgegenhaltungen:
- DE-A1- 1 525 454
- DE-A1- 3 615 476
- DE-A1- 4 243 509
- FR-A1- 2 193 951
- US-A- 5 108 136
- US-A1- 2009 110 494

## Beschreibung

Die Erfindung bezieht sich auf ein Verbindungsstück zur Verbindung mindestens dreier Rohrabschnitte, insbesondere eines Luftverteilsystems, wobei das Verbindungsstück mindestens drei Anschlussöffnungen aufweist, in welchen jeweils ein Ende eines der drei Rohrabschnitte fluiddicht fixierbar ist.

Derartige Verbindungsstücke sind insbesondere für Rohrabschnitte mit kreisförmigem Querschnitt bekannt. DE 42 43 509 A zeigt ein Verbindungsstück zur Verbindung vierer Rohrabschnitte. DE 36 15 476 A zeigt ein Verbindungsstück zur Verbindung dreier Rohrabschnitte. Es gibt jedoch auch zahlreiche Situationen, bei denen anstelle von Rohren mit kreisförmigem Querschnitt abgeflachte Rohre mit im wesentlichen rechteckförmigem oder ovalförmigem Querschnitt zur Anwendung kommen. Solche im Querschnitt im wesentlichen rechteckförmigen oder ovalförmigen Rohre verfügen im Vergleich zu im Querschnitt kreisförmigen Rohren bei gleich grossem Strömungsquerschnitt über deutlich verringerte Aussenabmessungen insgesamt und vor allem in einer der beiden Raumrichtungen der Querschnittsebene. Dies erlaubt es, derartige im wesentlichen rechteckförmige oder ovalförmige Rohre in knapp bemessenen Verlegeräumen, d.h. in knapp bemessenen Unterlagsböden (z.B. Betondecken), Wandaufdoppelungen und dgl. zu verlegen. Dabei treten immer wieder Situationen auf, bei denen auf engem Raum mindestens drei, insbesondere drei oder vier Rohrabschnitte miteinander verbunden werden müssen, deren Querschnittsformen auch unterschiedlich sein können. So werden in den o.g. knapp bemessenen Verlegeräumen bevorzugt Rohre mit im wesentlichen rechteckförmigem oder ovalförmigem Querschnitt verlegt, während in weniger knapp bemessenen Verlegeräumen bevorzugt Rohre mit kreisförmigem Querschnitt verlegt werden.

Der Erfindung liegt die Aufgabe zugrunde, dem Montagepersonal bei der Verlegung von Luftverteilungsrohren mit im wesentlichen rechteckförmigem oder ovalförmigem Querschnitt, ggfs. in Kombination mit Rohren mit kreisförmigem Querschnitt, eine verbesserte Flexibilität zu gewähren.

Zur Lösung dieser Aufgabe wird gemäss den unabhängigen Ansprüchen verschiedene Verbindungsstücke zur Verbindung mindestens dreier Rohrabschnitte, insbesondere eines Luftverteilsystems, vorgeschlagen.

Derartige Verbindungsstücke ermöglichen den Anschluss mindestens dreier Luftverteilungsrohre mit im wesentlichen ovalförmigem Querschnitt. Derartige Verbindungsstücke können auch die Erstellung einer Luftverteilungsrohr-Kreuzung geringer Bauhöhe von einem ersten und zweiten Luftverteilungsrohr mit jeweils im wesentlichen ovalförmigen Querschnitt ermöglichen.

Dabei ist es besonders vorteilhaft, wenn das Verbindungsstück aus zwei im wesentlichen identisch geformten Kanal-Teilstücken einstückig oder zweistückig aufgebaut ist, die jeweils eine erste Anschlussöffnung und eine zweite Anschlussöffnung aufweisen, welche jeweils einen im wesentlichen ovalförmigen Querschnitt haben, der zwei zueinander orthogonale Symmetrieachsen (X, Y) aufweist und dessen entlang seiner ersten Symmetrieachse (X) gemessene Breite B grösser als dessen entlang seiner zweiten Symmetrieachse (Y) gemessene Höhe H ist, wobei jedes der beiden Kanal-Teilstücke zwischen seinen beiden Anschlussöffnungen einen in der Breite vergrösserten und in der Höhe verringerten axialen Teilabschnitt hat, dessen entlang seiner ersten Symmetrieachse (X*) gemessene Breite B* grösser als die Breite B ist und dessen entlang seiner zweiten Symmetrieachse (Y*) gemessene Höhe H* kleiner als die Höhe H ist, d.h. auch hier **B* > B > H > H*.**

Vorzugsweise ist in dem axialen Teilabschnitt eines Kanal-Teilstücks die Breite B* gegenüber der Breite B beidseitig symmetrisch vergrössert, während die Höhe H* gegenüber der Höhe H einseitig asymmetrisch verringert ist.
Dies ermöglicht eine ineinander verschachtelte Anordnung zweier identischer Kanal-Teilstücke mit geringer Bauhöhe.

Vorzugsweise sind dabei die beiden Kanal-Teilstücke in ihrem in der Breite vergrösserten und in der Höhe verringerten axialen Teilabschnitt mit ihrer jeweiligen Kanalseite, an welcher die Höhe H* einseitig asymmetrisch verringert ist, gekreuzt aneinanderliegend angeordnet, wodurch die beiden axialen Teilabschnitte den Kanal-Kreuzungsbereich bilden.

Zweckmässigerweise ist die Summe der beiden verringerten Höhen H* des Querschnitts in dem Kanal-Kreuzungsbereich maximal gleich gross wie die Höhe H des Querschnitts in den Anschlussöffnungen.

Weitere Vorteile, Merkmale und Anwendungsmöglichkeiten der Erfindung ergeben sich aus der nun folgenden, nicht einschränkend aufzufassenden Beschreibung dreier Ausführungsbeispiele des erfindungsgemässen Verbindungsstücks anhand der Zeichnung, wobei
Fig. 1A eine Perspektivansicht eines ersten Ausführungsbeispiels des erfindungsgemässen Verbindungsstücks ist;
Fig. 1B eine Draufsicht quer zur Kanalrichtung des Verbindungsstücks des ersten Ausführungsbeispiels der Fig. 1A ist;
Fig. 1C eine Ansicht längs der Kanalrichtung des Verbindungsstücks des ersten Ausführungsbeispiels der Fig. 1A ist;
Fig. 1D eine Seitenansicht quer zur Kanalrichtung des Verbindungsstücks des ersten Ausführungsbeispiels der Fig. 1A ist;
Fig. 2A eine Perspektivansicht eines zweiten Ausführungsbeispiels des erfindungsgemässen Verbindungsstücks ist;
Fig. 2B eine Draufsicht quer zur Kanalrichtung des Verbindungsstücks des zweiten Ausführungsbeispiels der Fig. 2A ist;
Fig. 2C eine Ansicht längs der Kanalrichtung des Verbindungsstücks des zweiten Ausführungsbeispiels der Fig. 2A ist;
Fig. 2D eine Seitenansicht quer zur Kanalrichtung des Verbindungsstücks des zweiten Ausführungsbeispiels der Fig. 2A ist;
Fig. 3A eine Perspektivansicht eines dritten Ausführungsbeispiels des erfindungsgemässen Verbindungsstücks ist;
Fig. 3B eine Draufsicht quer zur Kanalrichtung des Verbindungsstücks des dritten Ausführungsbeispiels der Fig. 3A ist;
Fig. 3C eine Ansicht längs der Kanalrichtung des Verbindungsstücks des dritten Ausführungsbeispiels der Fig. 3A ist.

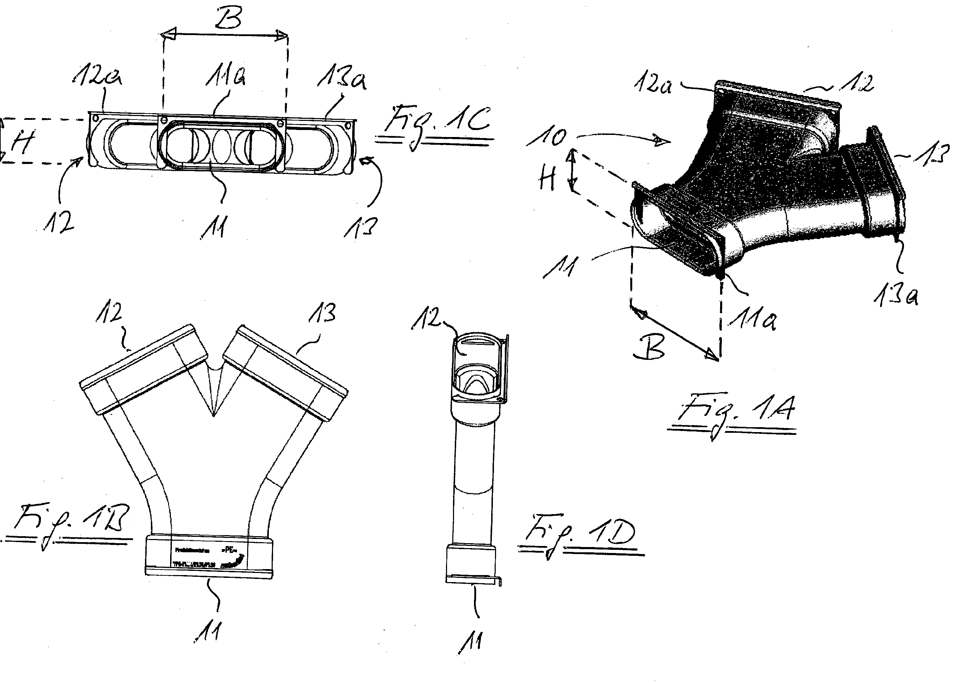

Die Fig. 1A, 1B, 1C, 1D zeigen ein erstes Ausführungsbeispiel des erfindungsgemässen Verbindungsstücks 10. Das Verbindungsstück 10 hat hier eine **Kanalverzweigungs-Konfiguration** mit drei Anschlussöffnungen 11, 12, 13. Jede der Anschlussöffnungen 11, 12, 13 hat einen im wesentlichen rechteckförmigen oder ovalförmigen oder auch rennbahnartigen oder stadionartigen Querschnitt, der zwei zueinander orthogonale Symmetrieachsen aufweist und dessen entlang seiner ersten Symmetrieachse X gemessene Breite B grösser als dessen entlang seiner zweiten Symmetrieachse Y gemessene Höhe H ist.

An der Anschlussöffnung 11 ist ein im wesentlichen U-förmiger Schieber 11a in einer Aussparung oder einem Schlitz quer zur axialen Richtung des Verbindungsstücks 10 verschiebbar gelagert.
An der Anschlussöffnung 12 ist ein im wesentlichen U-förmiger Schieber 12a in einer Aussparung oder einem Schlitz quer zur axialen Richtung des Verbindungsstücks 10 verschiebbar gelagert.

An der Anschlussöffnung 13 ist ein im wesentlichen U-förmiger Schieber 13a in einer Aussparung oder einem Schlitz quer zur axialen Richtung des Verbindungsstücks 10 verschiebbar gelagert.
Die Schieber 11a, 12a, 13a dienen jeweils zur Verriegelung eines in die jeweilige Anschlussöffnung 11, 12, 13 eingeschobenen Lüftungsrohrs mit im wesentlichen ovalförmigem Querschnitt.

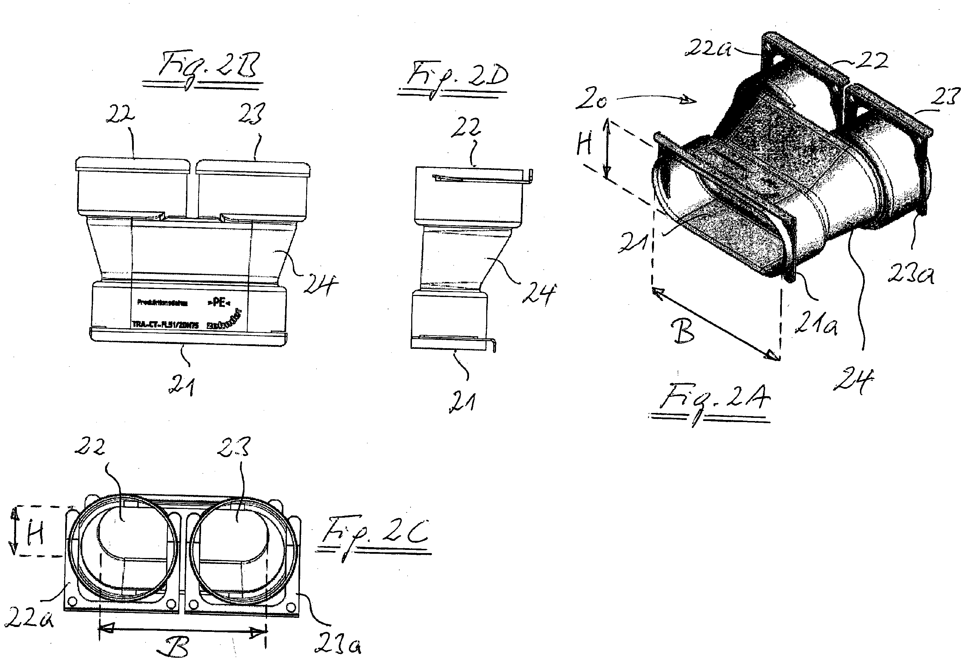

Die Fig. 2A, 2B, 2C, 2D zeigen ein zweites Ausführungsbeispiel des erfindungsgemässen Verbindungsstücks 20. Das Verbindungsstück 20 hat hier eine
**Kanalverzweigungs-Konfiguration,** welche eine erste Anschlussöffnung 21 aufweist, welche einen im wesentlichen rechteckförmigen oder ovalförmigen Querschnitt hat, der zwei zueinander orthogonale Symmetrieachsen aufweist und dessen entlang seiner ersten Symmetrieachse X gemessene Breite B grösser als dessen entlang seiner zweiten Symmetrieachse Y gemessene Höhe H ist, und welche eine zweite Anschlussöffnung 22 und eine dritte Anschlussöffnung 23 aufweist, welche jeweils einen im wesentlichen kreisförmigen Querschnitt haben.

An der Anschlussöffnung 21 ist ein im wesentlichen U-förmiger Schieber 21a in einer Aussparung oder einem Schlitz quer zur axialen Richtung des Verbindungsstücks 20 verschiebbar gelagert.
An der Anschlussöffnung 22 ist ein im wesentlichen U-förmiger Schieber 22a in einer Aussparung oder einem Schlitz quer zur axialen Richtung des Verbindungsstücks 20 verschiebbar gelagert.
An der Anschlussöffnung 23 ist ein im wesentlichen U-förmiger Schieber 23a in einer Aussparung oder einem Schlitz quer zur axialen Richtung des Verbindungsstücks 20 verschiebbar gelagert.
Die Schieber 21a, 22a, 23a dienen jeweils zur Verriegelung eines in die jeweilige Anschlussöffnung 21, 22, 23 eingeschobenen Lüftungsrohrs mit im wesentlichen ovalförmigem Querschnitt.
Zwischen der Anschlussöffnung 21 und den beiden Anschlussöffnungen 22, 23 befindet sich ein im wesentlichen konusartiger Übergangsbereich 24.

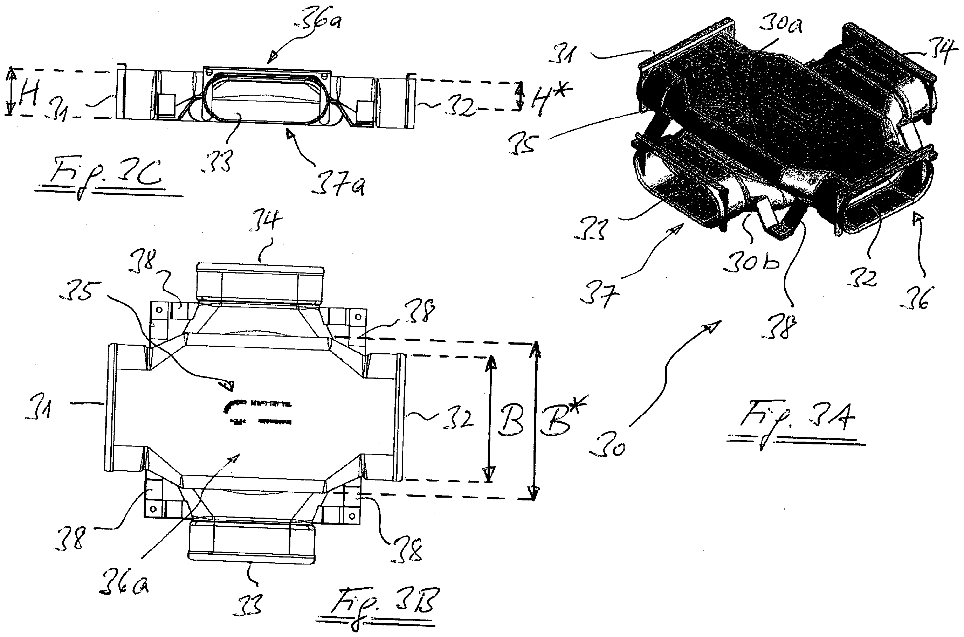

Die Fig. 3A, 3B, 3C zeigen ein drittes Ausführungsbeispiel des erfindungsgemässen Verbindungsstücks 30. Das Verbindungsstück 30 hat hier eine **Kanalvorbeiführungs-Konfiguration,** in welcher ein erster Kanalabschnitt 30a des Verbindungsstücks und ein zweiter Kanalabschnitt 30b des Verbindungsstücks in einem Kanal-Kreuzungsbereich 35 voneinander fluiddicht getrennt, aneinander vorbei verlaufend und einander kreuzend angeordnet sind. Das Verbindungsstück 30 hat vier Anschlussöffnungen 31, 32, 33, 34, welche jeweils einen im wesentlichen rechteckförmigen oder ovalförmigen Querschnitt haben, der zwei zueinander orthogonale Symmetrieachsen aufweist und dessen entlang seiner ersten Symmetrieachse X gemessene Breite B grösser als dessen entlang seiner zweiten Symmetrieachse Y gemessene Höhe H ist.
(B > H)

Der erste Kanalabschnitt 30a und der zweite Kanalabschnitt 30b in dem Kanal-Kreuzungsbereich 35 haben jeweils eine vergrösserte Breite B* und eine verringerte Höhe H* und jeweils einen im wesentlichen rechteckförmigen oder ovalförmigen Querschnitt, der zwei zueinander orthogonale Symmetrieachsen X*, Y* aufweist und dessen entlang seiner ersten Symmetrieachse X* gemessene Breite B* grösser als die Breite B ist und dessen entlang seiner zweiten Symmetrieachse Y* gemessene Höhe H* kleiner als die Höhe H ist.
**(B* > B > H > H*)**

Das Verbindungsstück 30 ist aus zwei im wesentlichen identisch geformten Kanal-Teilstücken 36, 37 einstückig oder zweistückig aufgebaut, die jeweils eine erste Anschlussöffnung 31, 32 und eine zweite Anschlussöffnung 33, 34 aufweisen, welche jeweils einen im wesentlichen rechteckförmigen oder ovalförmigen Querschnitt haben, der zwei zueinander orthogonale Symmetrieachsen X, Y aufweist und dessen entlang seiner ersten Symmetrieachse X gemessene Breite B grösser als dessen entlang seiner zweiten Symmetrieachse Y gemessene Höhe H ist, wobei jedes der beiden Kanal-Teilstücke 36, 37 zwischen seinen beiden Anschlussöffnungen 31, 32 bzw. 33, 34 einen in der Breite vergrösserten und in der Höhe verringerten axialen Teilabschnitt 36a, 37a hat, dessen entlang seiner ersten Symmetrieachse X* gemessene Breite B* grösser als die Breite B ist und dessen entlang seiner zweiten Symmetrieachse Y* gemessene Höhe H* kleiner als die Höhe H ist.
**(B* > B > H > H*)**

Bie dem Verbindungsstück 30 ist in dem axialen Teilabschnitt 36a, 37a eines Kanal-Teilstücks 36 bzw. 37 die Breite B* gegenüber der Breite B beidseitig symmetrisch vergrössert, während die Höhe H* gegenüber der Höhe H einseitig asymmetrisch verringert ist. Die beiden Kanal-Teilstücke 36, 37 sind in ihrem in der Breite vergrösserten und in der Höhe verringerten axialen Teilabschnitt 36a, 37a mit ihrer jeweiligen Kanalseite, an welcher die Höhe H* einseitig asymmetrisch verringert ist, gekreuzt aneinanderliegend angeordnet, so dass die beiden axialen Teilabschnitte 36a, 37a den Kanal-Kreuzungsbereich 35 bilden. Die Summe der beiden verringerten Höhen H* des Querschnitts in dem Kanal-Kreuzungsbereich 35 ist maximal gleich gross wie die Höhe H des Querschnitts in den Anschlussöffnungen.

Zwischen dem Kanal-Teilstück 36 und dem Kanal-Teilstück 37 erstrecken sich vier Befestigungsbeschläge 38, die zur Befestigung des Verbindungsstücks an einem Boden (z.B. an einer Schaltafel) dienen.

## Patentansprüche

1. Verbindungsstück (30) zur Verbindung vierer Rohrabschnitte, insbesondere eines Luftverteilsystems, wobei das Verbindungsstück vier Anschlussöffnungen aufweist, in welchen jeweils ein Ende eines der vier Rohrabschnitte fluiddicht fixierbar ist, wobei die vier Anschlussöffnungen jeweils einen im wesentlichen ovalförmigen Querschnitt hat, der zwei zueinander orthogonale Symmetrieachsen (X, Y) aufweist und dessen entlang seiner ersten Symmetrieachse (X) gemessene Breite B grösser als dessen entlang seiner zweiten Symmetrieachse (Y) gemessene Höhe H ist, wobei,
a) das Verbindungsstück eine Kanalvorbeiführungs-Konfiguration bildet, in welcher ein erster Kanalabschnitt (30a) des Verbindungsstücks und ein zweiter Kanalabschnitt (30b) des Verbindungsstücks in einem Kanal-Kreuzungsbereich (35) voneinander fluiddicht getrennt, aneinander vorbei verlaufend und einander kreuzend angeordnet sind;
b) der erste Kanalabschnitt (30a) und der zweite Kanalabschnitt (30b) in dem Kanal-Kreuzungsbereich (35) jeweils eine vergrösserte Breite B* und eine verringerte Höhe H* aufweisen und jeweils einen im wesentlichen ovalförmigen Querschnitt haben, der zwei zueinander orthogonale Symmetrieachsen (X*, Y*) aufweist und dessen entlang seiner ersten Symmetrieachse (X*) gemessene Breite B* grösser als die Breite B ist und dessen entlang seiner zweiten Symmetrieachse (Y*) gemessene Höhe H* kleiner als die Höhe H ist;
c) das Verbindungsstück (30) aus zwei im wesentlichen identisch geformten Kanal-Teilstücken (36, 37) einstückig oder zweistückig aufgebaut ist, die jeweils eine erste Anschlussöffnung (31, 32) und eine zweite Anschlussöffnung (33, 34) aufweisen, wobei jedes der beiden Kanal-Teilstücke (36, 37) zwischen seinen beiden Anschlussöffnungen (31, 32 bzw. 33, 34) einen in der Breite vergrösserten und in der Höhe verringerten axialen Teilabschnitt (36a, 37a) hat, dessen entlang seiner ersten Symmetrieachse (X*) gemessene Breite B* grösser als die Breite B ist und dessen entlang seiner zweiten Symmetrieachse (Y*) gemessene Höhe H* kleiner als die Höhe H ist, d.h. B* > B > H > H*; und
d) zwischen dem ersten Kanal-Teilstück (36) und dem zweiten Kanal-Teilstück (37) sich vier Befestigungsbeschläge (38) erstrecken, die zur Befestigung des Verbindungsstücks an einem Boden dienen.

2. Verbindungsstück (30) nach Anspruch 1, **dadurch gekennzeichnet, dass** in dem axialen Teilabschnitt (36a, 37a) eines Kanal-Teilstücks (36 bzw. 37) die Breite B* gegenüber der Breite B beidseitig symmetrisch vergrössert ist, während die Höhe H* gegenüber der Höhe H einseitig asymmetrisch verringert ist.

3. Verbindungsstück (30) nach Anspruch 2, **dadurch gekennzeichnet, dass** die beiden Kanal-Teilstücke (36, 37) in ihrem in der Breite vergrösserten und in der Höhe verringerten axialen Teilabschnitt (36a, 37a) mit ihrer jeweiligen Kanalseite, an welcher die Höhe H* einseitig asymmetrisch verringert ist, gekreuzt aneinanderliegend angeordnet sind, wodurch die beiden axialen Teilabschnitte (36a, 37a) den Kanal-Kreuzungsbereich (35) bilden.

4. Verbindungsstück (30) nach einem der Ansprüche 1 bis 3, **dadurch gekennzeichnet, dass** die Summe der beiden verringerten Höhen H* des Querschnitts in dem Kanal-Kreuzungsbereich (35) maximal gleich gross wie die Höhe H des Querschnitts in den Anschlussöffnungen (31, 32, 33, 34) ist.

5. Verbindungsstück (10) zur Verbindung mindestens dreier Rohrabschnitte, insbesondere eines Luftverteilsystems, wobei das Verbindungsstück mindestens drei Anschlussöffnungen aufweist, in welchen jeweils ein Ende eines der drei Rohrabschnitte fluiddicht fixierbar ist, wobei das Verbindungsstück (10) mindestens eine Anschlussöffnung aufweist, welche einen im wesentlichen ovalförmigen Querschnitt hat, der zwei zueinander orthogonale Symmetrieachsen (X, Y) aufweist und dessen entlang seiner ersten Symmetrieachse (X) gemessene Breite B grösser als dessen entlang seiner zweiten Symmetrieachse (Y) gemessene Höhe H ist,
**dadurch gekennzeichnet, dass**
das Verbindungsstück eine Kanalverzweigungs-Konfiguration bildet und drei Anschlussöffnungen (11, 12, 13) aufweist, welche jeweils einen im wesentlichen ovalförmigen Querschnitt haben, der zwei zueinander orthogonale Symmetrieachsen aufweist und dessen entlang seiner ersten Symmetrieachse (X) gemessene Breite B grösser als dessen entlang seiner zweiten Symmetrieachse (Y) gemessene Höhe H ist; und dass
an den drei Anschlussöffnungen (11, 12, 13) jeweils ein im wesentlichen U-förmiger Schieber (11a, 12a, 13a) in einer Aussparung oder einem Schlitz quer zur axialen Richtung des Verbindungsstücks (10) verschiebbar gelagert ist.

6. Verbindungsstück (20) zur Verbindung mindestens dreier Rohrabschnitte, insbesondere eines Luftverteilsystems, wobei das Verbindungsstück mindestens drei Anschlussöffnungen aufweist, in welchen jeweils ein Ende eines der drei Rohrabschnitte fluiddicht fixierbar ist, wobei das Verbindungsstück (20) mindestens eine Anschlussöffnung aufweist, welche einen im wesentlichen ovalförmigen Querschnitt hat, der zwei zueinander orthogonale Symmetrieachsen (X, Y) aufweist und dessen entlang seiner ersten Symmetrieachse (X) gemessene Breite B grösser als dessen entlang seiner zweiten Symmetrieachse (Y) gemessene Höhe H ist,
**dadurch gekennzeichnet, dass**
das Verbindungsstück eine Kanalverzweigungs-Konfiguration bildet, dass es eine erste Anschlussöffnung (21) aufweist, welche einen im wesentlichen ovalförmigen Querschnitt hat, der zwei zueinander orthogonale Symmetrieachsen aufweist und dessen entlang seiner ersten Symmetrieachse (X) gemessene Breite B grösser als dessen entlang seiner zweiten Symmetrieachse (Y) gemessene Höhe H ist, und dass es eine zweite Anschlussöffnung (22) und eine dritte Anschlussöffnung (23) aufweist, welche jeweils einen im wesentlichen kreisförmigen Querschnitt haben; und dass
an den drei Anschlussöffnungen (21, 22, 23) jeweils ein im wesentlichen U-förmiger Schieber (21a, 22a, 23a) in einer Aussparung oder einem Schlitz quer zur axialen Richtung des Verbindungsstücks (20) verschiebbar gelagert ist.

## Claims

1. Connection piece (30) for connecting four pipe sections, in particular of an air distribution system, wherein the connection piece has four connection openings in which a respective end of one of the four pipe sections is fixable in a fluid-tight manner, wherein each of the four connection openings has a substantially oval-shaped cross section, which has two axes of symmetry (X, Y) orthogonal to one another, the width B of which cross section as measured along its first axis of symmetry (X) being greater than the height H of said cross section as measured along its second axis of symmetry (Y), wherein
a) the connection piece forms a channel passing configuration, in which a first channel section (30a) of the connection piece and a second channel section (30b) of the connection piece are arranged separate from each other in a fluid-tight manner, passing each other and crossing each other in a channel crossing region (35);
b) the first channel section (30a) and the second channel section (30b) in the channel crossing region (35) each have an increased width B* and a reduced height H* and each have a substantially oval-shaped cross section, which has two axes of symmetry (X*, Y*) orthogonal to one another, its width B* as measured along its first axis of symmetry X* is greater than the width B, and its height H* as measured along its second axis of symmetry Y* is smaller than the height H;
c) the connection piece is formed as one piece or as two pieces of two substantially identical channel parts (36, 37), which each have a first connection opening (31, 32) and a second connection opening (33, 34), wherein each of the two channel parts (36, 37) between the two connection openings (31, 32, respectively 33, 34) have an axial section with increased width and decreased height, its width B* as measured along its first axis of symmetry X* is greater than the width B, and its height H* as measured along its second axis of symmetry Y* is smaller than the height H, in other words B*>B>H>H*; and
d) four fittings (38) extend between the first channel part (36) and the second channel part (37) to fix the connection piece to a base.

2. Connection piece (30) according to claim 1, **characterised in that** in the axial section (36a, 37a) of one the channel parts (36, respectively 37) the width B* increases symmetrically on both sides with respect to the width B, while the height H* decreases asymmetrically on one side with respect to the width H.

3. Connection piece (30) according to claim 2, **characterised in that** both channel parts (36, 37) are arranged to cross each other in the axial section (36a, 37a) with increased width and decreased height, on their channel side where the height is asymmetrically decreased, whereby both axial sections (36a, 37a) form the channel crossing region (35).

4. Connection piece (30) according to any one of claims 1 to 3, **characterised in that** the sum of both reduced heights H* of the cross section in the channel crossing region (35) is at most as great as the height of the cross section in the connection openings (31, 32, 33, 34).

5. Connection piece (10) for connecting at least three pipe sections, in particular of an air distribution system, wherein the connection piece has at least three connection openings in which a respective end of one of the three pipe sections is fixable in a fluid-tight manner, wherein the connection piece (10) has at least one connection opening, which has a substantially oval-shaped cross section, which has two axes of symmetry (X, Y) orthogonal to one another, the width B of which cross section as measured along its first axis of symmetry (X) being greater than the height H of said cross section as measured along its second axis of symmetry (Y), **characterised in that**
the connection piece forms a channel branching configuration and has three connection openings (11, 12, 13), which each have a substantially oval-shaped cross section, which has two axes of symmetry (X, Y) orthogonal to one another, the width B of which cross section as measured along its first axis of symmetry (X) being greater than
the height H of said cross section as measured along its second axis of symmetry (Y); and **in that**
on each of the three connection openings (11, 12, 13) a substantially U-shaped spacer (11a, 12a, 13 a) is slidably mounted orthogonally to the axial direction of the connection piece (10) in a cavity or slit.

6. Connection piece (20) for connecting at least three pipe sections, in particular of an air distribution system, wherein the connection piece has at least three connection openings in which a respective end of one of the three pipe sections is fixable in a fluid-tight manner, wherein the connection piece (20) has at least one connection opening, which has a substantially oval-shaped cross section, which has two axes of symmetry (X, Y) orthogonal to one another, the width B of which cross section as measured along its first axis of symmetry (X) being greater than the height H of said cross section as measured along its second axis of symmetry (Y), **characterised in that**
the connection piece forms a channel branching configuration, **in that** it has a first connection opening (21), which has a substantially oval-shaped cross section, which has two axes of symmetry (X, Y) orthogonal to one another, the width B of which cross section as measured along its first axis of symmetry (X) being greater than the height H of said cross section as measured along its second axis of symmetry (Y), that it has a second connection opening (22) and a third connection opening (23), which each have a substantially circular cross section; and **in that**
on each of the three connection openings (21, 22, 23) a substantially U-shaped spacer (21a, 22a, 23a) is slidably mounted orthogonally to the axial direction of the connection piece (10) in a cavity or slit.

## Revendications

1. Pièce de connexion (30) pour la connexion de quatre sections tubulaires, en particulier d'un système de distribution d'air, la pièce de connexion possédant quatre ouvertures de connexion, dans lesquels une extrémité respective de l'une des quatre sections tubulaires peut être fixée de manière étanche au fluide, les quatre ouvertures de connexion ayant une section transversale principalement ovale, avec deux axes de symétrie orthogonaux chacun par rapport à l'autre (X, Y), et dont la largeur B mesurée le long de son premier axe de symétrie (X) est supérieure à sa hauteur H mesurée le long de son deuxième axe de symétrie (Y), dans laquelle,
a) la pièce de connexion forme une configuration de passage de canal, dans laquelle une première section de canal (30a) de la pièce de connexion et une deuxième section de canal (30b) de la pièce de connexion sont séparées de manière étanche au fluide l'une de l'autre, agencées pour passer l'une à côté de l'autre et pour se croiser l'une l'autre dans une région de croisement de canal (35);
b) la première section de canal (30a) et la deuxième section de canal (30b) ont chacune une largeur élargie B* et une hauteur réduite H* dans la région de croisement de canal (35) et ont chacune une section transversale essentiellement ovale qui présente deux axes de symétrie orthogonaux (X*, Y*) et dont la largeur B* mesurée le long de son premier axe de symétrie (X*) est supérieure à la largeur B et la hauteur H* mesurée le long de son deuxième axe de symétrie (Y*) est inférieure à la hauteur H;
c) la pièce de connexion (30) est réalisée en une seule pièce ou en deux pièces à partir de deux tronçons de canal (36, 37) essentiellement identiques, chacun ayant une première ouverture de connexion (31, 32) et une deuxième ouverture de connexion (33, 34), dans laquelle chacun des deux tronçons de canal (36, 37) entre ses deux ouvertures de connexion (31, 32 ou 33, 34) a une section partielle axiale (36a, 37a) augmentée en largeur et réduite en hauteur, dont la largeur B* mesurée le long de son premier axe de symétrie (X*) est supérieure à la largeur B, et dont la hauteur H* mesurée le long de son deuxième axe de symétrie (Y*) est inférieure à la hauteur H, c'est-à-dire B* > B > H > H*; et
d) entre le premier tronçon de canal (36) et le deuxième tronçon de canal (37), quatre raccords de montage (38) s'étendent qui servent à fixer la pièce de connexion dans un plancher.

2. Pièce de connexion (30) selon la revendication 1, **caractérisée en ce que** la largeur B* est augmentée symétriquement des deux côtés dans la section partielle axiale (36a, 37a) d'un tronçon de canal (36 ou 37), tandis que la hauteur H* est réduite de manière asymétrique par rapport à la hauteur H d'un côté.

3. Pièce de connexion (30) selon la revendication 2, **caractérisée en ce que** les deux tronçons de canal (36, 37) dans leur section partielle axiale (36a, 37a) augmentée en largeur et réduite en hauteur, sur leur côté de canal respectif (36a, 37a), où la hauteur est réduite de manière asymétrique d'un côté, sont agencés pour se croiser, les deux sections partielles axiales (36a, 37a) forment ainsi la région de croisement de canal (35).

4. Pièce de connexion (30) selon l'une quelconque des revendications 1 à 3, **caractérisée en ce que** la somme des deux hauteurs réduites H* de la section transversale dans la région de croisement de canal (35) est au maximum égale à la hauteur H de la section transversale dans les ouvertures de connexion (31, 32, 33, 34).

5. Pièce de connexion (10), pour la connexion d'au moins trois sections tubulaires, en particulier d'un système de distribution d'air, la pièce de connexion possédant au moins trois ouvertures de connexion, dans lesquels une extrémité respective de l'une des trois sections tubulaires peut être fixée de manière étanche au fluide, dans laquelle la pièce de connexion comprend au moins une ouverture de connexion, qui a une section transversale essentiellement ovale, avec deux axes de symétrie orthogonaux chacun par rapport à l'autre (X, Y), et dont la largeur B mesurée le long de son premier axe de symétrie (X) est supérieure à sa hauteur H mesurée le long de son deuxième axe de symétrie (Y),
**caractérisée en ce que** la pièce de connexion forme une configuration de bifurcation de canal et présente trois ouvertures de connexion (11, 12, 13) qui ont chacune une section transversale ovale qui comporte deux axes de symétrie mutuellement orthogonaux et la largeur B mesurée le long de son premier axe de symétrie (X) est supérieure à sa hauteur H mesurée le long de son deuxième axe de symétrie (Y); et **en ce que**
un écarteur (11a, 12a, 13a) essentiellement en forme de U est monté de manière déplaçable aux trois ouvertures de connexion (11, 12, 13) dans un évidement ou une fente transversalement à la direction axiale de la pièce de connexion (10).

6. Pièce de connexion (20) pour la connexion d'au moins trois sections tubulaires, en particulier d'un système de distribution d'air, la pièce de connexion possédant au moins trois ouvertures de connexion, dans lesquels une extrémité respective de l'une des trois sections tubulaires peut être fixée de manière étanche au fluide, dans laquelle la pièce de connexion (20) comprend au moins une ouverture de connexion, qui a une section transversale essentiellement ovale, avec deux axes de symétrie orthogonaux chacun par rapport à l'autre (X, Y), et dont la largeur B mesurée le long de son premier axe de symétrie (X) est supérieure à sa hauteur H mesurée le long de son deuxième axe de symétrie (Y),
**caractérisée en ce que**
la pièce de connexion forme une configuration de bifurcation de canal, **en ce qu'**elle comporte une première ouverture de connexion (21) qui a une section transversale essentiellement ovale qui comporte deux axes de symétrie mutuellement orthogonaux et dont la largeur B mesurée le long de son premier axe de symétrie (X) est supérieure à sa hauteur mesurée le long de son deuxième axe de symétrie (Y), et **en ce qu'**il comporte une deuxième ouverture de connexion (22) et une troisième ouverture de connexion (23) dont chacune a une section essentiellement circulaire; et **en ce que**
un écarteur essentiellement en forme de U (21a, 22a, 23a) est monté de manière déplaçable aux trois ouvertures de connexion (21, 22, 23) dans un évidement ou une fente transversalement à la direction axiale de la pièce de connexion (20).
